# EUROPEAN PATENT SPECIFICATION

(11) **EP 1 478 572 B1**
(45) Date of publication and mention of the grant of the patent: **03.09.2008**
(21) Application number: 03705609.0
(22) Date of filing: 20.02.2003
(51) Int. Cl.: B64F 1/22

(54) **ENGAGEMENT AND HOISTING DEVICE FOR TOWING VEHICLE AND COUPLING DEVICE THEREFOR**
EINGRIFFS- UND HEBEVORRICHTUNG ZUM SCHLEPPEN EINES FAHRZEUGS UND VERBINDUNGSVORRICHTUNG DAFÜR
DISPOSITIF D'ACCROCHAGE ET DE REMORQUAGE POUR VEHICULE TRACTEUR ET DISPOSITIF DE COUPLAGE UTILISE A CET EFFET

(30) Priority: 25.02.2002 SE 0200540
(43) Date of publication of application: 24.11.2004
(73) Proprietor: Kalmar Motor AB, 391 28 Kalmar (SE)
(72) Inventor: JOHANSSON, Bengt, S-388 92 Ljungbyholm (SE); JOHANSSON, Magnus, S-388 92 Ljungbyholm (SE)
(74) Representative: Lundquist, Lars-Olof
(86) International application number: PCT/SE2003/000272
(87) International publication number: WO 2003/070569

(56) References cited:
- GB-A- 2 261 640
- US-A- 4 130 210

## Description

The present invention relates to an engagement and hoisting device for a towing vehicle for ground movement of aircraft, which have at least one nose wheel, the towing vehicle having a wheel-mounted chassis, said engagement and hoisting device being designed to be brought into engagement with and lift up the nose wheel relative to the chassis and comprising
- a stand which is substantially U-shaped with its opening turned towards the aircraft,
- journalling members which flexibly connect the stand to the chassis,
- actuators, arranged between the stand and the chassis to raise and lower the engagement and hoisting device relative to the chassis and
- a nose wheel holder including a central inner portion and having
   - an inner space, which can be opened in the direction of the nose wheel to receive the nose wheel,
   - carrying members for carrying the nose wheel in said space and
   - forward and rear wheel supports for retaining the nose wheel in the longitudinal direction of the towing vehicle with the nose wheel holder being substantially U-shaped with its opening facing the aircraft seen in a starting position where the nose wheel holder is aligned to be moved into position to receive the nose wheel,
said nose wheel holder and stand being designed as two separate units and include interacting, journalling members, arranged in an arc, which define a vertical axis of rotation for said units,
said aircraft having a nose wheel stand which includes a steering shaft for supporting the nose wheel, said nose wheel stand is of a first type, in which the engagement and hoisting device is brought into engagement with the nose wheel only with said forward and rear wheel supports.

The invention also relates to a coupling device adapted to be mounted to such an engagement and hoisting device.

An engagement and hoisting device of the above-mentioned kind and disclosing the features of the preamble of claim 1, is known through EP-A-1294609. It is designed to be brought into engagement with the nose wheels without the nose wheel stand being fixed to the engagement and hoisting device by means of a coupling device. Such an arrangement is possible to use for most types of aircraft. However, there are certain aircraft which have their nose wheels mounted on the nose wheel stand by a link and spring mechanism, with the nose wheel stand having a forward-facing connection element, which at its free end supports one end of said link and a carrying element for releasable connection of a towbar, which is used for conventional towing. When towing such an aircraft with the aid of an.engagement and hoisting device of the type initially mentioned there is however a risk of the spring mechanism having its spring unintentionally fully extended so that large forces will be transmitted to the spring mechanism, which means that the spring mechanism and other adjacent parts of the nose wheel stand will be damaged.

GB 2 261 640 describes a tractor for towing aircraft, having a main frame that supports a pivotable beam one end of which carries a replaceable locking tool for engaging the nose wheel assembly. The tool has a pivotable connector and a support block. The connector engages a horizontal bar, carried by a nose wheel strut, in order to fix the aircraft to the tractor in longitudinal direction. The support block engages the base of the strut and applies lifting forces thereto when the beam is pivoted upwardly. Thus, the tool is not engaging the nose wheels per se.

US 4,130,210 describes a dolly for moving airplanes, having a U-shaped swing frame that is fixed on an upstanding pivotable post and supports a cradle including a ramp for reception of the nose wheel thereon. Said post supports a power cylinder the piston rod of which having a hook for engaging about the strut. With the ramp lowered to the ground and adjacent the nose wheel the hook is moved to engage about the strut. By further operating the cylinder the hook pulls the strut toward the dolly and causes the nose wheel to ride onto the ramp until engaging a stop in which position the nose wheel is held by the retracted cylinder. The ramp and the nose wheel are then raised by cylinders to a position above ground. Thus, the nose wheel has to be pulled onto the ramp by a separate power cylinder while gripping the strut by a hook and operating the cylinder in order to hold the nose wheel on the ramp by the hook.

The purpose of the present invention is to improve the engagement and hoisting device initially mentioned so that it can also be used for towing the last-mentioned specific type of aircraft without any forces being transmitted to and damaging said spring mechanism.

The invention is particularly applicable to such an engagement and hoisting device as defined in the introductory section, i.e. the nose wheel holder and the stand are designed as two separate units and comprise interacting journalling members arranged in an arc, which define a vertical axis of rotation for said units. Such an engagement and hoisting device solves the problems which are associated with the arrangements which are described in, for example, SE-500 744 and SE-501 788. Moving an aircraft on the ground with the aid of a towing vehicle which is connected to the nose wheel of the aircraft means when there is a change in the direction of the towing vehicle that, when the maximum steering angle of the aircraft has been reached, a torque is transmitted to the nose wheel stand via the nose wheels and its upwardly directed steering or turning shaft. This torque may not exceed prescribed levels which are issued by the aircraft manufacturer concerned. In the following this maximum permitted torque is designated maximum torque or maximum value. SE-500 744 describes a towing vehicle, where the chassis-borne engagement and hoisting device is arranged to be brought during the movement of the towing vehicle relative to the nose wheels into a starting position close to but not touching the nose wheel of the aircraft in front of and behind the point of contact of the nose wheels with the ground in order then to be raised from said starting position so as to be brought by opposing free surface contact with the treads of the nose wheels on either side of said ground contact point into releasable engagement with the nose wheels so that these are lifted from the ground when the engagement and hoisting device is raised. The engagement and hoisting unit forms a rigid connection between nose wheels and chassis. In order to permit a change in angle between towing vehicle and aircraft the steering hydraulics of the aircraft must thus be disengaged and the rotary movement of the nose wheels must be restricted by mechanical end stops on the aircraft. At these end stops the aircraft has reached maximum steering angle and a torque will be transmitted to the nose wheel stand via the axis of rotation of the nose wheels, whereupon the torque, as mentioned above, may not exceed a maximum value set by the aircraft manufacturer. If there is no warning before the maximum torque is exceeded, there is a very great risk of the nose wheel stand being damaged. SE-501 788 describes a device for measuring and indicating the steering angle of the aircraft relative to the towing vehicle in order thereby to prevent the nose wheel stand being subjected to the damaging maximum torque. However, such a device has disadvantages such as the fact that a sensor wire has to be connected to the aircraft. As there are differences between aircraft models it may be difficult to provide equipment that fits all types of aircraft that a towing vehicle has to be able to handle. With the type of towing vehicle that is connected to the aircraft with the aid of a towbar there is a restriction of the torque with the aid of a break pin in the towbar or in the tow beam attachment to the nose wheel stand. A disadvantage of this system is that no warning is received before the set torque is exceeded so the towing vehicle has to be replaced or the towbar has to be changed. In addition there is a risk that the nose wheel stand may be damaged because the towbar is in certain cases released from the aircraft. The above-mentioned preferred engagement and hoisting device permits safety requirements of the aviation authorities and operating or functional requirements of the users to be satisfied so that improved control of and safety in the ground movement of the aircraft is obtained in comparison with known towing vehicles.

The engagement and hoisting device is characterized in that - in order to facilitate the use of the engagement and hoisting device also for aircraft having a nose wheel stand of a second type, in which the nose wheel is mounted to the nose wheel stand via a link and a spring mechanism, wherein the nose wheel stand has a forward-facing carrying element that at its free end carries the one end of said link and a coupling element - the engagement and hoisting device is provided with a coupling device to be coupled to said coupling element of the nose wheel stand of said second type, said coupling device comprising an attachment part which is mounted to said central inner portion of the nose wheel holder, and an engagement part, which is connected to the attachment part and comprises a locking device, said engagement part being arranged to extend in the direction towards the nose wheel and to be brought into position for engagement with said opposing coupling element of the nose wheel stand, in which engagement position the locking device is arranged to prevent, when in a locking position, the engagement part from being separated from the coupling element.

The invention will be described in detail in the following with reference to the drawings.
Figure 1 shows a towing vehicle with an engagement and hoisting device which carries an aircraft via its nose wheel.
Figure 2 shows the engagement and hoisting device as in figure 1 with its nose wheel holder turned in one direction in relation to its stand.
Figure 3 shows the engagement and hoisting device as in figure 2 but with its nose wheel holder turned in the other direction in relation to its stand.
Figure 4 shows the journalling of the nose wheel holder at the stand.
Figure 5 shows an engagement and hoisting device similar to the one in Figure 2, but also equipped with a break device between the nose wheel holder and the stand, with the engagement and hoisting device being opened ready to receive the nose wheels.
Figure 6 shows the engagement and hoisting device as in Figure 5 in engagement with the nose wheels.
Figure 7 shows an engagement and hoisting device similar to the one in Figure 2, but also equipped with a braking mechanism between the nose wheel holder and the stand.
Figure 8 shows the braking mechanism in Figure 7.
Figure 9 shows an engagement and hoisting device similar to the one in Figure 2, but also equipped with a torque indicator between the nose wheel holder and the stand.
Figure 10 shows the torque indicator in Figure 9.
Figures 11-13 show different views of an engagement and hoisting device with a coupling device according to the invention.
Figures 14-16 show different views of the coupling device.

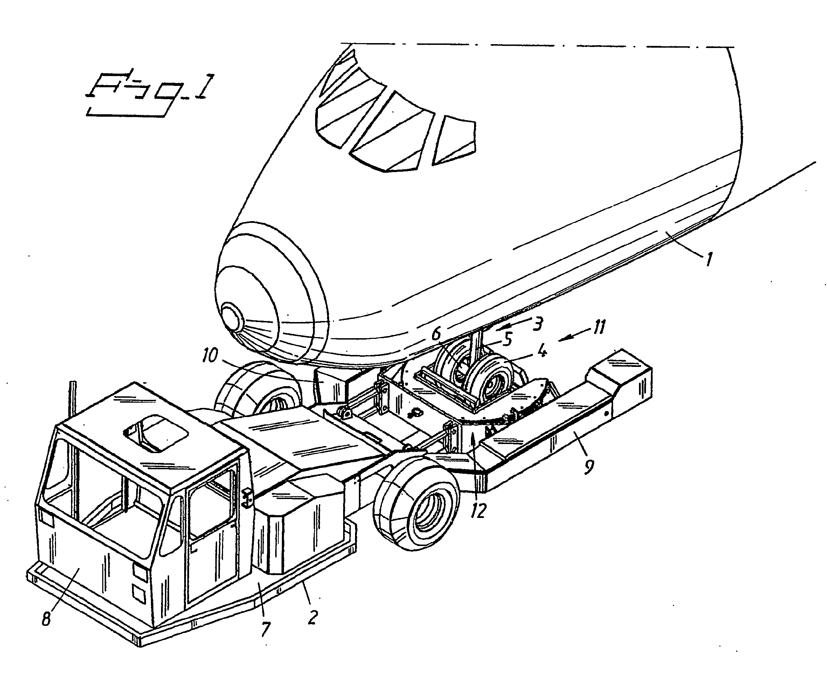

Figure 1 shows an aircraft 1 and a wheeled towing vehicle 2 for transport of the aircraft 1 on the ground. The aircraft 1 has a nose wheel stand 3, which comprises two nose wheels 4 and an upward-facing steering or turning shaft 5, which carries the nose wheels 4 and which is rotatably journalled in the nose wheel stand 3 and lockable in the same with a hydraulic locking mechanism (not shown) to lock the single wheel axle 6 of the nose wheels 4 in a position at a right angle to the longitudinal axis of the aircraft 1. The towing vehicle 2 comprises a chassis 7, the one end portion of which supporting a cab 8 and which comprises two longitudinal horizontal beams 9, 10 which are arranged at a predetermined distance from each other in order to define between themselves a space 11 which is open at the end which faces away from the cab 8 to be aligned with the aircraft 1 when the aircraft 1 is to be moved on the ground. The two beams 9, 10 each have a wheel or pair of wheels (not visible in Figure 1) at their free end portions which are turned towards the aircraft 1.

The towing vehicle 2 comprises an engagement and hoisting device 12 that can be raised and lowered in order to be brought into freely supporting engagement with the nose wheels 4 as the only point of engagement, which thus means that the towing vehicle 2 is otherwise entirely free from contact or engagement with the nose wheel stand 3, and to lift the nose wheels 4 from the ground to an adequate level to allow movement of the aircraft 1 with the aid of the towing vehicle 2. The engagement and hoisting device 12 is located in said space 11 between the beams 9, 10 and carried by these via actuators 13 in the form of power cylinders by means of which the engagement and hoisting device 12 can be lowered to a lower position at ground level and lifted to a transport position in which the engagement and hoisting device 12 clears the ground as do the nose wheels 4. Further, the engagement and hoisting device 12 is also flexibly connected with the chassis 7 via a journalling member 15 with suitable joints at its ends which allow desired changes of position of the engagement and hoisting device 12. In the embodiment shown the journalling member 15 is in the form of four link arms arranged in pairs. Alternatively it may consist of one link arm.

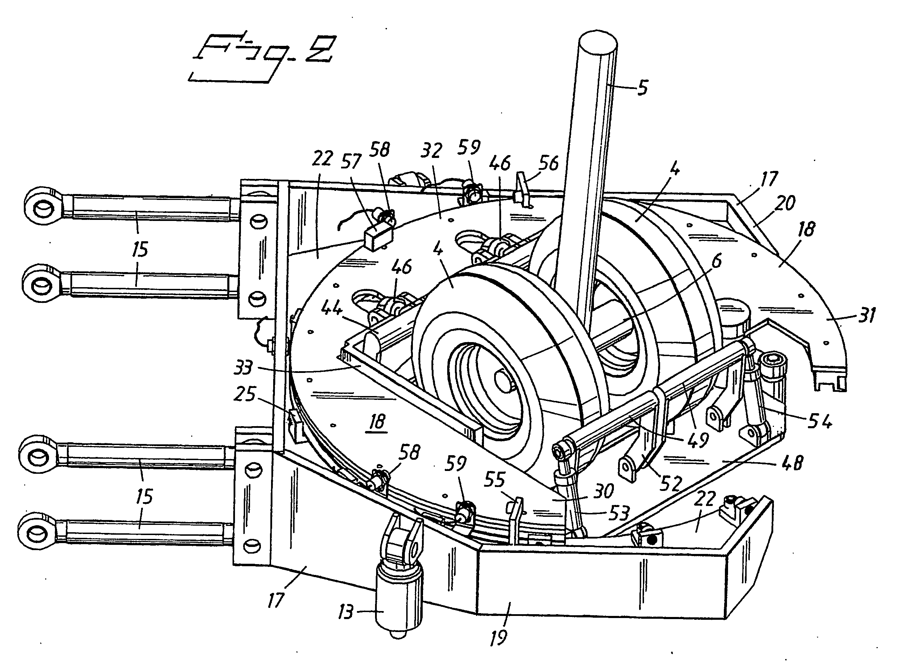

As is shown in detail in, for example, Figure 2, the engagement and hoisting device 12 comprises a stand 17 and a nose wheel holder 18, which are designed as two separate units, which are rotatably journalled in relation to each other. Both the stand 17 and the nose wheel holder 18 are substantially U-shaped.

The U-shaped stand 17 is horizontally arranged and comprises two backward-facing legs 19, 20 and a transverse connection piece 21, which rigidly connects the legs 19, 20 to each other and which extends at right angles to the longitudinal direction of the towing vehicle 2 and on which said link arms 15 are journalled on its outside. The legs 19, 20 and the connection piece 21 includes internal, horizontal bottom plates 22, seamlessly merging into each other and having arc-shaped inner edge portions 23 so that the stand 17 obtains a vertical inside 24 with a predetermined radius.

The U-shaped nose wheel holder 18 is horizontally arranged inside the U-shaped stand 17 flush with this and comprises two legs 30, 31 and a connection piece 32, which rigidly connects the legs 30, 31 with each other and which faces towards the inside parts of the stand 17 (which include the connection piece 21 of the stand 17). Each leg 30, 31 has a vertical wall 33, 34 on its inside, the two walls 33, 34 being parallel with each other and defining between themselves an inner nose wheel space 35, which is adapted to the width of the nose wheels 4 so that these can be received therein with sufficient play to the walls 33, 34 of the legs, the width of the space 35 being large enough for the nose wheels even of large aircraft to be received therein, i.e. one and the same towing vehicle may be used for aircraft of virtually all sizes.

The nose wheel holder 18 has outside edge portions 36, which are arc-shaped to give it a vertical outside 37 of a predetermined radius, which is somewhat larger than said radius of the inside 24 of the stand 17.

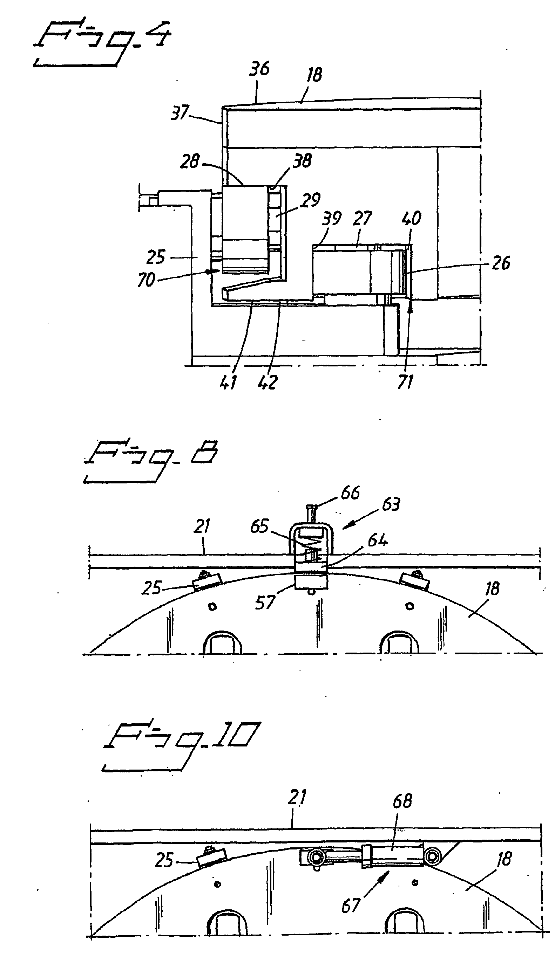

The stand 17 and the nose wheel holder 18 are designed as mentioned above as two separate units and include interacting journalling members 70, 71, which are arranged in an arc equivalent to the length of the curved insides 24 and outsides 37 to form a turning ring. These outer journalling members 70, 71 define a vertical axis of rotation for said units 17, 18. The journalling member 70 of the stand 17 includes a plurality of roller elements, which with the aid of angle profiles 25 are mounted at regular intervals to the upper side of said bottom plates 22 along an arc of predetermined radius. As shown in detail in Figure 4 each angle profile 25 supports a first roller 26, which is journalled on a vertical shaft journal 27 on the horizontal part of the angle profile 25, and a second roller 28, which is journalled on a horizontal shaft 29 on the vertical part of the angle profile 25. Adjacent to the outside 37 of the nose wheel holder 18, i.e. radially inside it, the outer edge portion 36 of the nose wheel holder 18 is provided with a horizontal support and rolling surface 38 for interaction with the second rollers 28 of the roller elements, and two vertical, inner and outer, concentric supporting and rolling surfaces 39, 40 for interaction with the first rollers 26 of the roller elements. Said carrying and rolling surface 38 and supporting and rolling surfaces 39, 40 thus together form the journalling member 71 of the nose wheel holder 18. The nose wheel holder 18 is thus carried by said second rollers 28 via its horizontal carrying and rolling surface 38, which extends in a continuous arc along the whole outside 37, with the carrying and rolling surface 38 being so located in relation to the horizontal underside 41 of the nose wheel holder 18 that a small clearance 42 is created between this underside 41 and the horizontal parts of the angle profiles 25 thereby preventing friction between them. The two concentric supporting and rolling surfaces 39, 40 are arranged at a radial distance from each other which is equal to or only slightly greater than the diameter of the second rollers 28. The two supporting and rolling surfaces 39, 40 and the second rollers 28 interact with each other so that the nose wheel holder 18 is fixed in a radial direction whatever the rotational position. The two supporting and rolling surfaces 39, 40 thus define the vertical axis of rotation of the nose wheel holder 18.

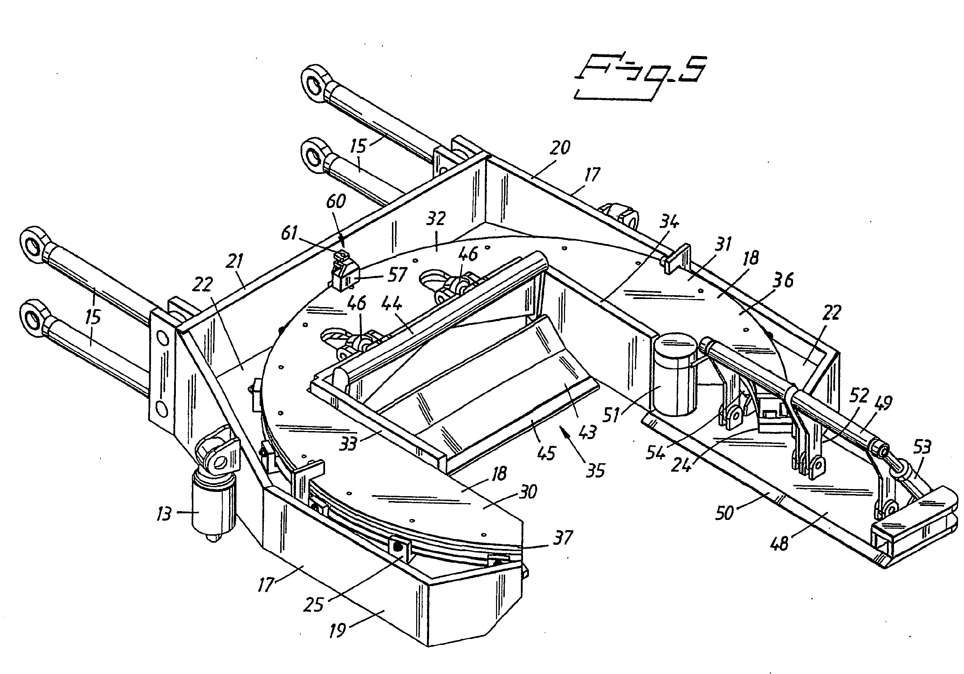

Further the nose wheel holder 18 comprises an inner carrying plate 43, see Figure 5, and an inner, horizontal wheel support 44, located at a predetermined distance above the carrying plate 43. The carrying plate 43 extends between the vertical walls 33, 34 of the legs and is movably mounted on these in order to be moved with the aid of power cylinders (not shown) relative to the connection piece 32 so that its position can be adjusted and adapted to the dimension of the nose wheel. By this means the nose wheel holder 18 can with best fit lock nose wheels of different dimensions which are present by different aircraft. The carrying plate 43 has a concave upper side which is roughly adapted to the radii of different nose wheels 4 and which may be in sections, as shown on the drawings, or unitary curved. The carrying plate has a lower, horizontal edge portion 45, which has a downward-sloping surface and which is situated flush with the underside of the stand or somewhat below it. The wheel support 44 is rotatably mounted to the nose holder 18, with two power cylinders 46 being flexibly attached by their piston rods to the ends of the wheel support 44 to bring the wheel support 44 to press against the nose wheels 4.

Further the nose wheel holder 18 includes an outer carrying plate 48 and an outer horizontal wheel support 49, located at a predetermined distance above the carrying plate 48 and preferably in the same level as the inner wheel support 44. The carrying plate 48 has a horizontal edge portion 50, which has a downward-sloping surface and which is situated flush with the edge portion 45 of the inner carrying plate 43. The outer carrying plate 48 and the outer wheel support 49 together form a gate, which is rotatably journalled by means of a vertical rotary shaft which forms part of an actuator 51, which is in turn rigidly mounted on one leg 31 of the nose wheel holder 18. With the aid of the actuator 51 the gate can be opened and closed. The outer wheel support 49, which consists of two parts, is rotatably mounted on the carrying plate 48 by means of a plurality of link arms 52. Two power cylinders 53, 54 are flexibly connected by their piston rods to the ends of the wheel support 49 to bring the wheel support 49 to press against the nose wheels 4, see for example Figure 2. The two interacting, opposing wheel supports 44, 49 are suitably located at a level above, for example just above, a horizontal plane which intersects the centre axes of the nose wheels 4. This locks the nose wheels 4 in the vertical direction as well.

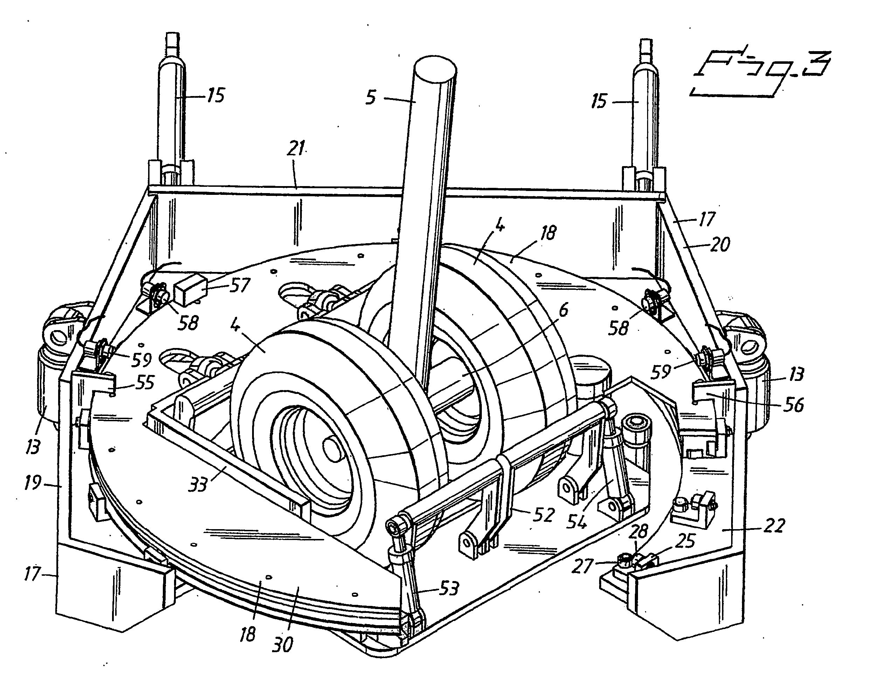

The stand 17 and the nose wheel holder 18 are provided with interacting stops 55, 56 and 57, which restrict the rotation of the nose wheel holder 18 in both directions. In addition the stand 17 is provided with two terminal position transducers 58, 59 located in front of the two stops 55, 56 on the stand 17, these terminal position transducers 58, 59 sensing the stop 57 of the nose wheel holder 18 to indicate the angle of rotation of the nose wheel holder 18 relative to the stand 17 and the towing vehicle 2 in order to be used for various control functions, e.g. to control the tractive force of the towing vehicle 2 so that this decreases and approaches zero if the direction of the towing vehicle 2 is not reversed. In the embodiment in Figures 1-3 the nose wheel holder is freely rotatably suspended in the stand 17 by means of the rollers 28 of the roller elements. This means that the angle of the towing vehicle 2 relative to the nose wheels 4 may vary without any appreciable torque being transmitted to the nose wheels 4. In this embodiment the nose wheels 4 may be locked, but they may also be disengaged. It is thus realized that when also the nose wheels 4 are disengaged, the turning radius of the towing vehicle 2 relative to the aircraft 1 may be further increased by making use of both the full angle of rotation of the nose wheel holder 18 and the full angle of rotation of the disengaged nose wheels 4.

Although the journalling members 70, 71 shown are at present preferred, they can naturally be designed in many other ways, e.g. in the form of a ball bearing segment or race in the one unit and interacting rolling surfaces for the balls in the other unit.

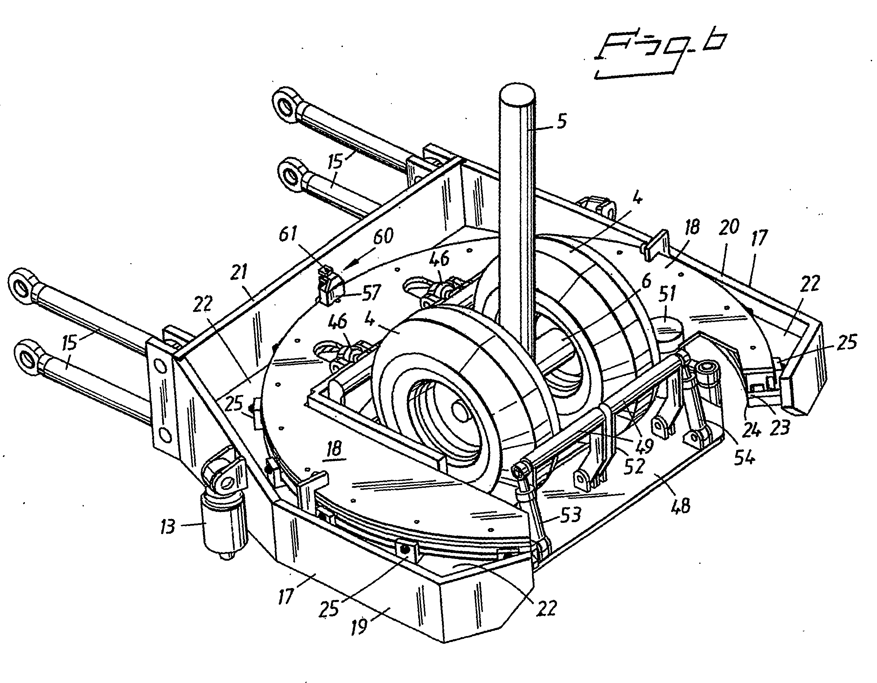

The Figures 5 and 6 show an engagement and hoisting device 12, similar to the one shown in Figures 1-3, but which is in addition provided with a rotation-inhibiting device in the form of a break device 60, which is arranged on the stand 17 and the nose wheel holder 18 adjacent to its central stop 57, seen in the starting position of the nose wheel holder 18, when the axis 6 of the nose wheels 4 is at a right angle to the longitudinal direction of the towing vehicle 2. The break device 60 comprises a break pin 61, with which the nose wheel holder 18 is fixed against rotation in said starting position. The break pin 61 is so designed as to break when the nose wheel holder 18 is subjected to a certain permitted torque in relation to the stand 17. In this embodiment the nose wheels 4 of the aircraft 1 are disengaged, the turning shaft 5 of the nose wheel stand 3 not being permitted to transmit a prescribed maximum torque to a rigid structural element of the nose wheel stand. Said permitted torque thus has a value lower than the value of said prescribed maximum torque.

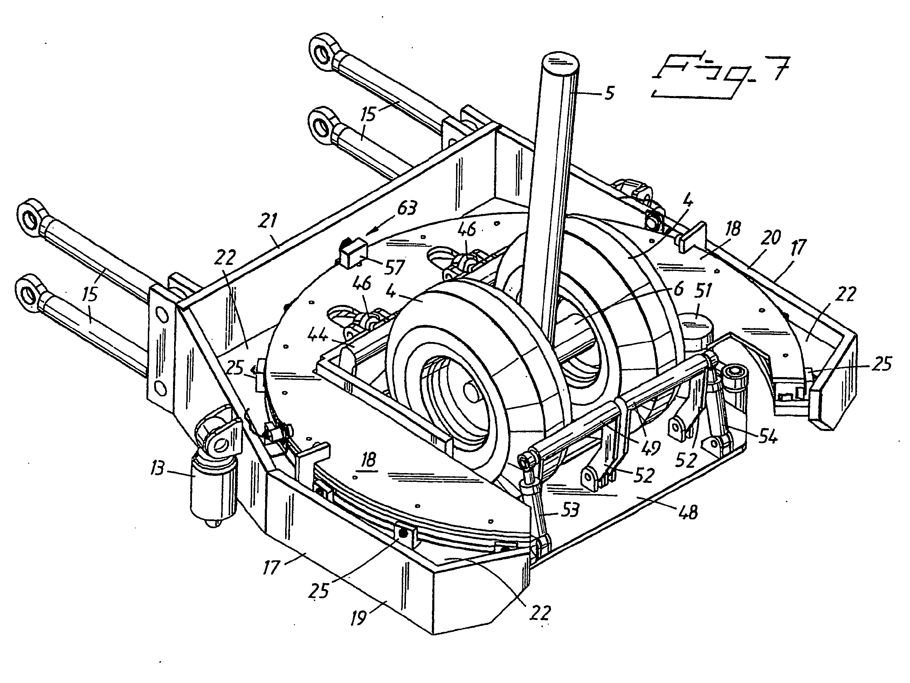

In the embodiment shown in Figure 7 a braking mechanism 62, the design of which is shown in detail in Figure 8, is used instead of a break device. In this case, too, the nose wheel holder 18 is fixed against rotation in its starting position, and also in all other positions between the two end stops. The braking mechanism 63 has a braking head 64 which presses against the outside of the nose wheel holder 18 with the spring force from a spring 65, the spring force being adjustable with a control device 66. The braking mechanism 63 is so adjusted that the friction between the braking head 64 and the curved outside of the nose wheel holder 18 is preferably equal to 80% or less of said maximum torque. Above this set value the nose wheel holder 18 will rotate.

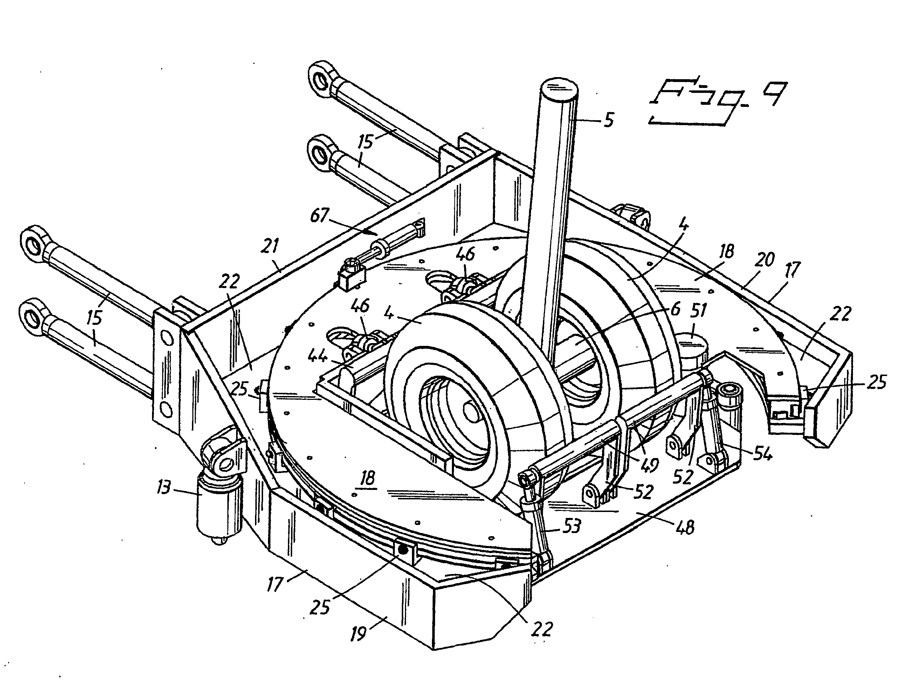

In the embodiment shown in Figure 9 a torque indicator 67, the design of which is shown in detail in Figure 10, is used instead of a braking mechanism. A piston cylinder 68 is flexibly attached between the stand 17 and the nose wheel holder 18 and reacts to changes in torque in the nose wheel holder 18. When for example 80% of the maximum torque is attained, the indicator 67 gives a signal to the driver, who is then able to reduce the torque by changing the direction of the towing vehicle. If this is not done and almost 100% of the maximum torque is attained, a signal is given which activates an alarm and the aircraft-moving operation is interrupted automatically.

The engagement and hoisting device allows measurement of the angle between towing vehicle and aircraft without direct contact. The human factor, i.e. the risk that the driver or another person will not mount equipment of the type described in, for example, SE-501 788 in the correct manner, is eliminated.

The towing vehicle allows simple, quick docking and coupling with the nose wheel or wheels without the aircraft being displaced from its parked position and without using screw joints and similar. The nose wheel need only to be lifted a short distance, e.g. about 50-100 mm, in order to clear unevenness in the transport path. The structure is sufficiently small in height to allow it to clear the flaps hanging down on the sides of the nose wheel stand. The engagement and hoisting device with its said turning ring, which is formed by said journalling members 70, 71, is unique, because it allows turning and generation of torque while applying both tractive forces and braking forces, and the engagement elements acting on the nose wheel do not in any way impede such a function.

The engagement and hoisting device 12 as described above is designed to be brought into free-supporting engagement with the nose wheels 4 without the nose wheel stand 3 being fixed to the engagement and hoisting device 12 by means of a coupling device. Such an arrangement can be used on most types of aircraft. There are however certain aircraft which have their nose wheels 4 mounted on the nose wheel stand 3 via a link 72 and a spring mechanism (not shown), with the nose wheel stand having a forward-facing carrying element 73, which at its free end carries the one end of said link 72 and a coupling element 74 for detachable connection of a towbar which is used for conventional towing. When towing such an aircraft with the aid of the engagement and hoisting device 12 of the above-mentioned kind there is a risk of the spring mechanism having its springing inadvertently fully extended so that large forces will be transmitted to the spring mechanism, which means that the spring mechanism and other adjacent parts of the nose wheel stand are damaged.

To be able also to use the advantageous engagement and hoisting device described on aircraft of the last-mentioned type the engagement and hoisting device is provided with a coupling device in accordance with the present invention.

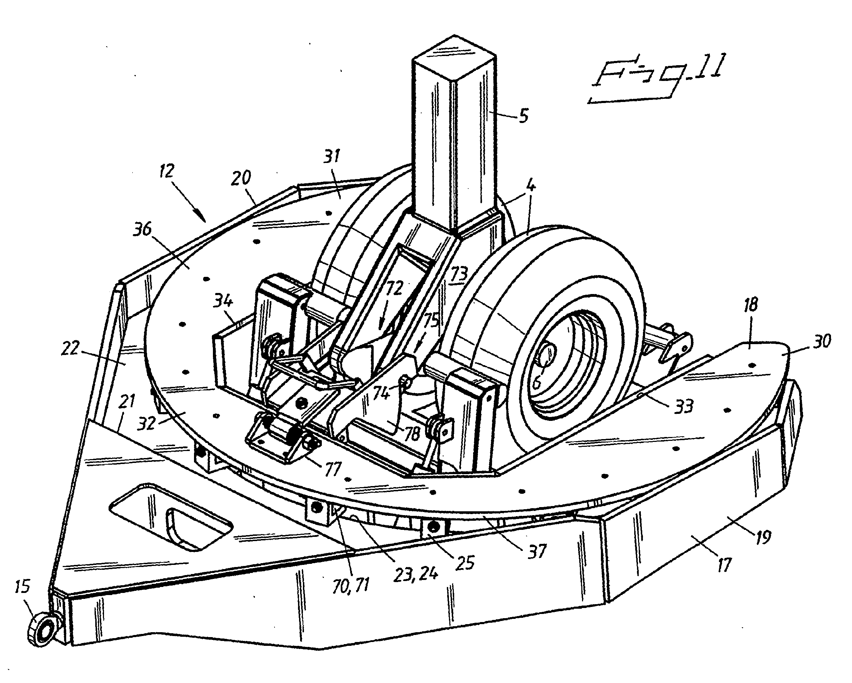

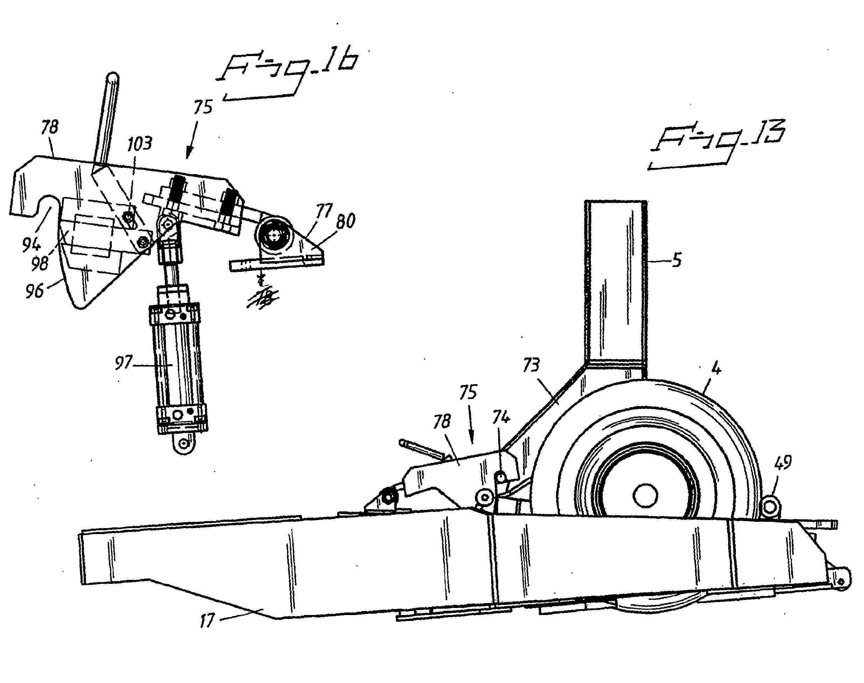

An engagement and hoisting device 12 with a coupling device 75 as in the invention is illustrated in Figures 11-13. A similar coupling device 75 can thus also be advantageously mounted on the engagement and hoisting devices 12 which have been described in detail above. The engagement and hoisting device 12 as shown in the Figures 11-13 basically resembles the engagement and hoisting devices 12 which have been described in detail above, with only minor design differences, for example the fact that the inner wheel support 44 is also divided to provide room for a carrying element 73 which is connected to the turning shaft 5 and extends forwards past the nose wheels 4 to support said coupling element 74 in the form of two coaxial coupling pins, facing away from each other. The same reference numbers are used to indicate the same or similar structural elements. Certain elements of the engagement and hoisting device have been omitted from the Figures 11-13 in order better to show the coupling device according to the invention in its mounted position.

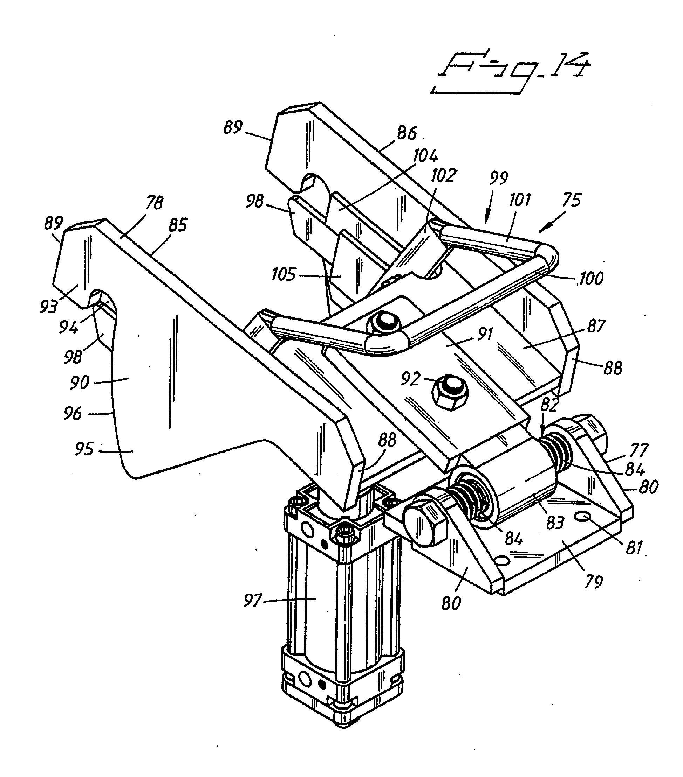

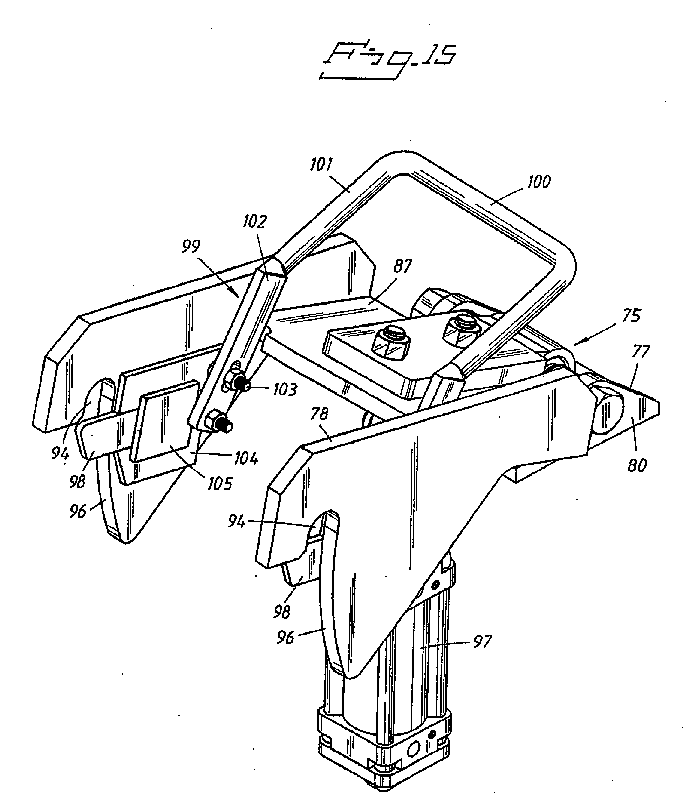

The coupling device 75, which is shown in detail in the Figures 14-16, comprises an attachment part 77 and an engagement part 78, which is rotatably journalled in the attachment part 77 around a horizontal centre axis, which is parallel to the centre axis of the nose wheels 4. The attachment part 77 consists of a flat plate 79, which is mounted on the horizontal inner connection piece 32 of the nose wheel holder 18 by means of screws 81, and two parallel lugs 80, which extend upwards from the side edges of the plate 79 to receive between them a bearing shaft 82, which forms said centre axis and which supports a bearing sleeve 83, and two pressure springs 84, which are arranged one on each side of the bearing sleeve 83 to act between this and the adjacent lug 80 with a view to producing a centring of the bearing sleeve 83 when this is not being actuated, and allowing lateral movement of the bearing sleeve 83 when this is influenced by external forces, to assume an off-centre position determined by a desired lateral displacement of the engagement part 78 in relation to the coupling pins 74 of the nose wheel stand 3. The engagement part 78 comprises two vertical, parallel side elements or plates 85, 86, which are arranged at a predetermined distance from each other and which are rigidly connected with each other by a flat mounting plate 87, which extends from the rear end 88 of the engagement part 78 in the direction towards its front end 89, with its inner edge being located in or close to the central portion 90 of the engagement part 78. Further the engagement part 78 has a flat connection plate 91, which is mounted to the mounting plate 87 by means of bolts 92 and which has a rear portion which extends outside the side plates 85, 86 for attachment of the mounting plate 87 to the bearing sleeve 83 in a rigid joint. Each side plate 85, 86 has a front end portion 93, which is provided with a notch 94 which faces downwards. Further each side plate 85, 86 has a central-lower portion 95, located substantially below the level of the mounting plate 87 and having a front, curved, convex support edge 96, which forms a supporting surface for the opposite coupling pin 74 of the nose wheel stand 3. The curved support edge 96 continues directly into the edge which defines the downward-facing notch 94, which is thus open downwards and situated in front of the support edge 96.

The coupling device also includes a pneumatic cylinder 97, the piston rod end of which being flexibly connected to an attachment member arranged on the underside of the mounting plate 87 and the cylinder end of which being flexibly connected to an attachment member arranged on a lower structural part of the nose wheel holder 18. The pneumatic cylinder 97 is arranged to be activated by the driver to rotate the engagement part 78 around the bearing shaft 82 of the attachment part 77 in order to assume an upper receiving position and a lower engagement position.

The engagement part 78 also has a locking device, which includes two locking pins 98 and an actuator 99 for synchronous movement of the locking pins 98 between a retracted starting position and a projecting locking position. In the embodiment shown the actuator 99 is of the manual type, but it may also be of the pneumatic type (not shown), in which latter case it includes a pneumatic cylinder (not shown). The actuator 99 shown comprises a U-shaped handle 100, whose legs 101 are each rigidly connected to their respective link arm 102. Each link arm 102 extends on or close to the inside of the associated side plate 85, 86 and is flexibly connected to the inner end portion of the locking pin 98 by means of a bolt. There is thus such a locking pin 98 on the inside of each side plate 85, 86. The link arm 102 is rotatably journalled around a horizontal stationary bolt 103. Further two vertical guide plates 104, 105 are mounted on the inside of each side plate 85, 86 and arranged to define between them a horizontally extending guide groove for sliding reception of the oblong locking pin 98. As is shown in the drawings a turning of the handle 100 backwards towards the attachment part 77 around an axis of rotation formed by the bolts 103 will displace the locking pins 98 out of the two pairs of guide plates 104, 105 to assume a locking position opposite the notches 94 seen in side projection.

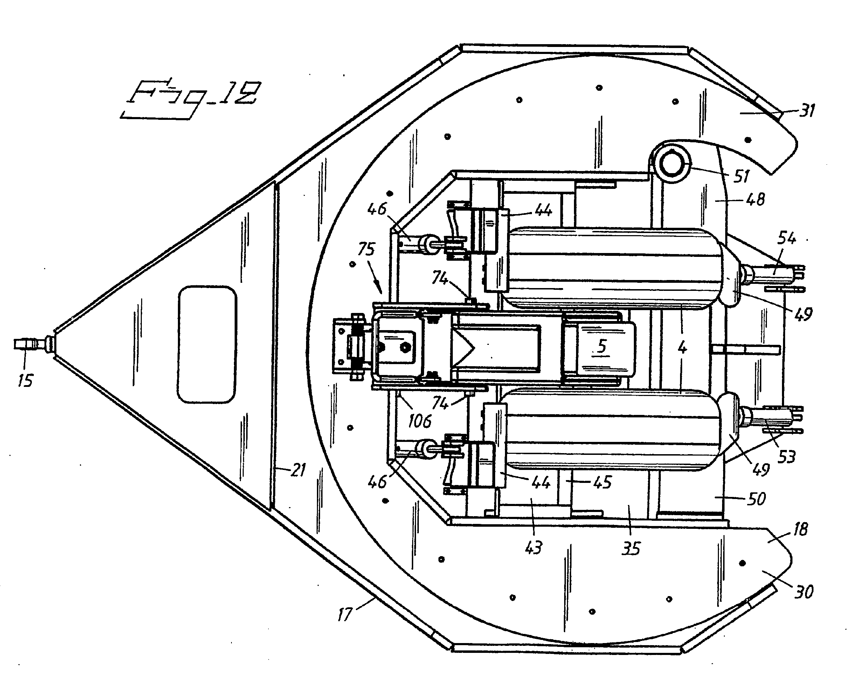

The coupling device also includes a sensor 106 (se Figure 12), which is arranged on the nose wheel holder 18 close to the rotatable engagement part 78 to indicate both its said receiving position and its said locked engagement position.

When the towing vehicle is to be docked with an aircraft with a nose wheel stand of the specific type, the engagement and hoisting device 12 is lowered to ground level and the outer carrying plate 48 is lowered 90°, after which the engagement part 78 of the coupling device 75 is turned up to receiving position with the aid of the pneumatic cylinder 97, the receiving position being indicated by the sensor 106 (Figure 12). The towing vehicle is driven in the direction to the nose wheels so that these are received in the engagement and hoisting device and until the coupling pins 74 of the nose wheel stand 3 meet the support edges 96 of the upturned engagement part 78. The engagement part 78 is then turned down to the engagement position with the aid of the pneumatic cylinder 97 so that the notches 94 receive the coupling pins 74. The handle 100 is lowered backwards manually or with the aid of a pneumatic cylinder (not shown) so that the locking pins are pressed out to provide a support for the coupling pins 74 so that these cannot leave the notches 94. The sensor 106 indicates that the coupling pins 74 are rigidly locked to the engagement part 78. The engagement part 78 is however in rotatable engagement with the coupling pins 74 in the locking position of the locking device. The outer carrying plate 48 is returned to closed position, after which the engagement and hoisting device is lifted a little way so that the nose wheels clear the ground. When the aircraft is towed traction and braking forces will be transmitted to the nose wheel stand via the coupling device 75. The engagement part 78 is in its locked engagement position arranged to be able to rotate around its axis of rotation 82 to follow movements in the nose wheel stand. In order to dampen such movements the air in the pneumatic cylinder 97 can be compressed after coupling so that said movements are dampened. Alternatively the compressed air to the pneumatic cylinder 97 can be disconnected so that air can flow freely out of and into the pneumatic cylinder 97.

## Claims

1. An engagement and hoisting device for a towing vehicle (2) for ground movement of aircraft (1), which have at least one nose wheel (4), the towing vehicle (2) having a wheel-mounted chassis (7), said engagement and hoisting device being designed to be brought into engagement with and lift up the nose wheel (4) relative to the chassis (7) and comprising
- a stand (17) which is substantially U-shaped with its opening turned towards the aircraft (1),
- journalling members (15) which flexibly connect the stand (17) to the chassis (7),
- actuators (13), arranged between the stand (17) and the chassis (7) to raise and lower the engagement and hoisting device (12) relative to the chassis (7) and
- a nose wheel holder (18) including a central inner portion (32) and having
- an inner space (35), which can be opened in the direction of the nose wheel (4) to receive the nose wheel (4),
- carrying members (43, 48) for carrying the nose wheel (4) in said space (35) and
- forward and rear wheel supports (44, 49) for retaining the nose wheel (4) in the longitudinal direction of the towing vehicle with the nose wheel holder (18) being substantially U-shaped with its opening facing the aircraft (1) seen in a starting position where the nose wheel holder (18) is aligned to be moved into position to receive the nose wheel (4),
said nose wheel holder (18) and stand (17) being designed as two separate units and include interacting, journalling members (70, 71), arranged in an arc, which define a vertical axis of rotation for said units (17, 18),
said aircraft having a nose wheel stand (3) which includes a steering shaft (5) for supporting the nose wheel (4), said nose wheel stand (3) is of a first type, in which the engagement and hoisting device is brought into engagement with the nose wheel (4) only with said forward and rear wheel supports (44, 49),
**characterized in that** - in order to facilitate the use of the engagement and hoisting device also for aircraft having a nose wheel stand (3) of a second type, in which the nose wheel (4) is mounted to the nose wheel stand (3) via a link (72) and a spring mechanism, wherein the nose wheel stand (3) has a forward-facing carrying element (73) that at its free end carries the one end of said link (72) and a coupling element (74) - the engagement and hoisting device (12) is provided with a coupling device (75) to be coupled to said coupling element (74) of the nose wheel stand (3) of said second type, said coupling device (75) comprising an attachment part (77) which is mounted to said central inner portion (32) of the nose wheel holder (18), and an engagement part (78), which is connected to the attachment part (77) and comprises a locking device, said engagement part (78) being arranged to extend in the direction towards the nose wheel (4) and to be brought into position for engagement with said opposing coupling element (74) of the nose wheel stand (3), in which engagement position said locking device is arranged to prevent, when in a locking position, said engagement part (78) from being separated from said coupling element (74).

2. A device as claimed in claim 1, **characterized in that** the engagement part (78) is rotatably journalled in the attachment part (77) around a horizontal bearing shaft (82).

3. A device as claimed in claim 1 or 2, **characterized in that** the engagement part (78) is in rotatable engagement with the coupling element (74) in the locking position of the locking device.

4. A device as claimed in claim 2, **characterized in that** the engagement part (78) is resiliently clamped on the bearing shaft (82) for lateral movement relative to the coupling element against the effect of spring force.

5. A device as claimed in any one of claims 2-4, **characterized in that** the coupling device comprises a power cylinder (97) which is arranged to turn the engagement part (78) between an upper receiving position and a lower engagement position relative to the coupling element (74).

6. A device as claimed in claim 5, **characterized in that** the coupling device contains a sensor (106) for indication of said receiving position and said engagement position.

7. A device as claimed in any one of claims 1-6, **characterized in that** the engagement part (78) has two vertical side plates (85, 86), which are arranged at a distance from and rigidly connected with each other, and which have front end portions (93) each with a downward-facing notch (94) for reception of said coupling element (74), each side plate (85, 86) having a front support edge (96) arranged to form a supporting surface for said coupling element, said supporting surface continuous into said notch (94).

8. A device as claimed in claim 7, **characterized in that** the locking device comprises two locking pins (98) and an actuator (99) for synchronous movement of the locking pins (98) between a retracted starting position and a projecting locking position for exposing the notches (94) and retaining the coupling element (74) in the notches (94), respectively.

9. A device as claimed in any one of claims 1-8, **characterized in that** the stand (17) and the nose wheel holder (18) are provided with interacting stops (55, 56, 57), which are arranged to limit the rotation of the nose wheel holder (18) in both directions from a central starting position, and that the stand (17) is provided with two end position transducers (58, 59) arranged in front of both stops (55, 56) on the stand (17) in order to sense the stop (57) of the nose wheel holder (18) in order to indicate the angle of rotation of the nose wheel holder (18) relative to the stand (17) and the towing vehicle (2).

10. A device as claimed in claim 9, **characterized in that** the nose wheel holder (18) is arranged to turn freely when the course of the towing vehicle (2) changes in relation to the aircraft (1).

11. A device as claimed in any one of claims 9 and 10, **characterized in that** the engagement and hoisting device (12) comprises a rotation-inhibiting device which acts between the stand (17) and the nose wheel holder (18) to build up a torque between the stand (17) and the nose wheel holder (18) when there is a change in the course of the towing vehicle (2) relative to the aircraft (1).

12. A coupling device adapted to be mounted to an engagement and hoisting device for a towing vehicle (2) for ground movement of aircraft which have at least one nose wheel, said engagement and hoisting device being designed as defined in claim 1, **characterized in that** - in order to facilitate the use of said engagement.and hoisting device (12) also for aircraft having a nose wheel stand (3) of a second type, in which the nose wheel (4) is mounted to the nose wheel stand (3) via a link (72) and a spring mechanism, wherein the nose wheel stand (3) has a forward-facing carrying element (73) that at its free end carries the one end of said link (72) and a coupling element (74) - the coupling device (75) comprises an attachment part (77) for mounting to said central inner portion (32) of the nose wheel holder (18) and an engagement part (78) which is connected to the attachment part (77) and comprises a locking device, said engagement part (78) being arranged to extend in the direction towards the nose wheel (4) and to be brought into position for engagement with said opposing coupling element (74) of the nose wheel stand (3), in which engagement position the locking device is arranged to prevent, when in a locking position, the engagement part (78) from being separated from the coupling element (74).

13. A coupling device as claimed in claim 12, **characterized in that** it is designed as an additional unit for mounting to engagement and hoisting devices of existing towing vehicles.

14. A coupling device as claimed in claim 12 or 13, **characterized in that** the engagement part (78) is rotatably journalled to the attachment part (77) around a horizontal bearing shaft (82).

15. A coupling device as claimed in any one of claims 12-14, **characterized in that** the engagement part (78) is in rotatable engagement with the coupling element (74) in the locking position of the locking device.

16. A coupling device as claimed in claim 14, **characterized in that** the engagement part (78) is resiliently clamped on the bearing shaft (82) for lateral movement relative to the coupling element against the effect of spring force.

17. A coupling device as claimed in any one of claims 14-16, **characterized in that** it comprises a power cylinder (97), which is arranged to turn the engagement part (78) between an upper receiving position and a lower engaging position relative to the coupling element (74).

18. A coupling device as claimed in claim 17, **characterized in that** it includes a sensor (106) for indication of said receiving position and said engaging position.

19. A coupling device as claimed in any one of claims 12-18, **characterized in that** the engagement part (78) has two vertical side plates (85, 86) which are arranged at a distance from and rigidly connected to each other, and which have front end portions (93) each with a downward-facing notch (94) for reception of said coupling element (74), each side plate (85, 86) having a front support edge (96) arranged to form a support surface for said coupling element, said support area continuing into said notch (94).

20. A coupling device as claimed in claim 19, **characterized in that** the locking device comprises two locking pins (98) and an actuator (99) for synchronous movement of the locking pins (98) between a retracted starting position and a projecting locking position for exposing the notches (94) and retaining the coupling element (74) in the notches (94), respectively.

## Patentansprüche

1. Eingriff- und Hubvorrichtung für ein Schleppfahrzeug (2) für die Bodenbewegung eines Flugzeugs (1), wobei das Schleppfahrzeug (2) einen radunterstützten Rahmen (7) besitzt, wobei die Eingriff- und Hubvorrichtung so entworfen ist, dass sie mit dem Bugrad (4) in Eingriff gebracht werden kann und dieses relativ zu dem Rahmen (7) anheben kann, wobei die Vorrichtung umfasst:
- ein Untergestell (17), das im Wesentlichen die Form eines U hat, dessen Öffnung zum Flugzeug (1) gerichtet ist,
- Lagerelemente (15), die das Untergestell (17) mit dem Rahmen (7) flexibel verbinden,
- Stellglieder (13), die zwischen dem Untergestell (17) und dem Rahmen (7) angeordnet sind, um die Eingriff- und Hubvorrichtung (12) relativ zu dem Rahmen (7) anzuheben und abzusenken, und
- eine Bugradhalterung (18), die einen mittigen inneren Abschnitt (32) aufweist und enthält:
- einen Innenraum (35), der in Richtung des Bugrades (4) geöffnet werden kann, um das Bugrad (4) aufzunehmen,
- Tragelemente (43, 48) zum Tragen des Bugrades (4) in dem Raum (35) und
- vordere und hintere Radträger (44, 49) zum Halten des Bugrades (4) in Längsrichtung des Schleppfahrzeugs, wobei die Bugradhalterung (18) im Wesentlichen die Form eines U hat, deren Öffnung zum Flugzeug (1) weist, wenn sie in einer Ausgangsposition betrachtet wird, in der die Bugradhalterung (18) so ausgerichtet ist, dass sie in die Position bewegt werden kann, in der sie das Bugrad (4) aufnehmen kann,
wobei die Bugradhalterung (18) und das Untergestell (17) als zwei getrennte Einheiten entworfen sind und miteinander in Wechselwirkung stehende Lagerelemente (70, 71) enthalten, die auf einem Bogen angeordnet sind und für die Einheiten (17, 18) eine vertikale Drehachse definieren,
wobei das Flugzeug ein Bugradgestell (3) besitzt, das eine Lenkwelle (5) für Unterstützung des Bugrades (4) aufweist, wobei das Bugradgestell (3) von einem ersten Typ ist, bei dem die Eingriff- und Hubvorrichtung nur mit den vorderen und hinteren Radträgern (44, 49) mit dem Bugrad (4) in Eingriff gebracht wird,
**dadurch gekennzeichnet, dass** - um die Verwendung der Eingriff- und Hubvorrichtung auch für ein Flugzeug mit einem Bugradgestell (3) eines zweiten Typs, bei dem das Bugrad (4) mit dem Bugradgestell (3) über ein Verbindungsglied (72) und einen Federmechanismus angebracht ist, wobei das Bugradgestell (3) ein nach vorn weisendes Tragelement (73) besitzt, das an seinem freien Ende das eine Ende des Verbindungsglieds (72) und ein Kopplungselement (74) trägt, zu erleichtern - die Eingriff- und Hubvorrichtung (12) mit einer Kopplungsvorrichtung (75) versehen ist, die mit dem Kopplungselement (74) des Bugradgestells (3) des zweiten Typs zu koppeln ist, wobei die Kopplungsvorrichtung (75) einen Befestigungsabschnitt (77), der an dem mittigen inneren Abschnitt (32) der Bugradhalterung (18) angebracht ist, und einen Eingriffabschnitt (78), der mit dem Befestigungsabschnitt (77) verbunden ist und eine Verriegelungsvorrichtung enthält, umfasst, wobei der Eingriffabschnitt (78) so angeordnet ist, dass er sich in Richtung zu dem Bugrad (4) erstreckt und in seine Position für einen Eingriff mit dem gegenüberliegenden Kopplungselement (74) des Bugradgestells (3) gebracht wird, wobei die Verriegelungsvorrichtung dazu ausgelegt ist, dass sie dann, wenn sie in einer verriegelten Position ist, verhindert, dass der Eingriffabschnitt (78) von dem Kopplungselement (74) getrennt wird.

2. Vorrichtung nach Anspruch 1, **dadurch gekennzeichnet, dass** der Eingriffabschnitt (78) in dem Befestigungsabschnitt (77) um eine horizontale Lagerwelle (82) drehbar gelagert ist.

3. Vorrichtung nach Anspruch 1 oder 2, **dadurch gekennzeichnet, dass** der Eingriffabschnitt (78) in der Verriegelungsposition der Verriegelungsvorrichtung in einem Dreheingriff mit dem Kopplungselement (74) ist.

4. Vorrichtung nach Anspruch 2, **dadurch gekennzeichnet, dass** der Eingriffabschnitt (78) an der Lagerwelle (72) elastisch festgeklemmt ist, um entgegen der Wirkung einer Federkraft eine seitliche Bewegung relativ zu dem Kopplungselement auszuführen.

5. Vorrichtung nach einem der Ansprüche 2-4, **dadurch gekennzeichnet, dass** die Kopplungsvorrichtung einen Kraftstellkolben (77) umfasst, der dazu ausgelegt ist, den Eingriffabschnitt (78) zwischen einer oberen Aufnahmeposition und einer unteren Eingriffposition in Bezug auf das Kopplungselement (74) zu drehen.

6. Vorrichtung nach Anspruch 5, **dadurch gekennzeichnet, dass** die Kopplungsvorrichtung einen Sensor (106) enthält, der die Aufnahmeposition und die Eingriffposition angibt.

7. Vorrichtung nach einem der Ansprüche 1-6, **dadurch gekennzeichnet, dass** der Eingriffabschnitt (78) wenigstens zwei vertikale Seitenplatten (85, 86) besitzt, die in einem Abstand voneinander angeordnet und miteinander starr verbunden sind und vordere Endabschnitte (93) besitzen, wovon jeder eine nach unten weisende Kerbe (94) für die Aufnahme des Kopplungselements (74) besitzt, wobei jede Seitenplatte (85, 86) eine vordere Unterstützungskante (96) besitzt, die so angeordnet ist, dass sie eine Unterstützungsfläche für das Kopplungselement bildet, wobei die Unterstützungsfläche kontinuierlich in die Kerbe (94) übergeht.

8. Vorrichtung nach Anspruch 7, **dadurch gekennzeichnet, dass** die Verriegelungsvorrichtung zwei Verriegelungsstifte (98) und ein Stellglied (99) für die synchrone Bewegung der Verriegelungsstifte (98) zwischen einer zurückgezogenen Startposition und einer vorstehenden Verriegelungsposition, um die Kerben (94) freizugeben bzw. um das Kopplungselement (74) in den Kerben (94) zu halten, umfasst.

9. Vorrichtung nach einem der Ansprüche 1 bis 8, **dadurch gekennzeichnet, dass** das Untergestell (17) und die Bugradhalterung (18) mit miteinander in Wechselwirkung stehenden Anschlägen (55, 56, 57) versehen sind, die so angeordnet sind, dass sie die Drehung der Bugradhalterung (18) in beiden Richtungen aus einer mittigen Ausgangsposition begrenzen, und dass das Untergestell (17) mit zwei Endpositionswandlern (58, 59) versehen sind, die vor den beiden Anschlägen (55, 56) an dem Untergestell (17) angeordnet sind, um den Anschlag (57) der Bugradhalterung (18) zu erfassen, um den Drehwinkel der Bugradhalterung (18) relativ zu dem Untergestell (17) und dem Schleppfahrzeug (2) anzugeben.

10. Vorrichtung nach Anspruch 9, **dadurch gekennzeichnet, dass** die Bugradhalterung (18) so angeordnet ist, dass sie sich frei dreht, wenn sich der Kurs des Schleppfahrzeugs (2) relativ zu dem Flugzeug (1) ändert.

11. Vorrichtung nach einem der Ansprüche 9 und 10, **dadurch gekennzeichnet, dass** die Eingriff- und Hubvorrichtung (12) eine Drehverhinderungsvorrichtung umfasst, die zwischen dem Untergestell (17) und der Bugradhalterung (18) wirkt, um zwischen dem Untergestell (17) und der Bugradhalterung (18) ein Drehmoment aufzubauen, wenn eine Änderung des Kurses des Schleppfahrzeugs (2) relativ zu dem Flugzeug (1) erfolgt.

12. Kopplungsvorrichtung, die dazu ausgelegt ist, an einer Eingriff- und Hubvorrichtung für ein Schleppfahrzeug (2) für die Bodenbewegung eines Flugzeugs, das wenigstens ein Bugrad besitzt, angebracht zu werden, wobei die Eingriff- und Hubvorrichtung wie in Anspruch 1 definiert entworfen ist, **dadurch gekennzeichnet, dass** - um die Verwendung der Eingriff- und Hubvorrichtung (12) auch für ein Flugzeug mit einem Bugradgestell (3) eines zweiten Typs, bei dem das Bugrad (4) an dem Bugradgestell (3) über ein Verbindungsglied (72) und einen Federmechanismus angebracht ist, wobei das Bugradgestell (3) ein nach vorn weisendes Tragelement (73) besitzt, das an seinem freien Ende das eine Ende des Verbindungsglieds (72) und ein Kopplungselement (74) trägt, zu erleichtern - die Kopplungsvorrichtung (75) einen Befestigungsabschnitt (77) für die Anbringung an dem mittigen inneren Abschnitt (32) der Bugradhalterung (18) und einen Eingriffabschnitt (78), der mit dem Befestigungsabschnitt (77) verbunden ist und eine Verriegelungsvorrichtung aufweist, umfasst, wobei der Eingriffabschnitt (78) so angeordnet ist, dass er sich in Richtung zu dem Bugrad (4) erstreckt, und in eine Position für den Eingriff mit dem gegenüberliegenden Kopplungselement (74) des Bugradgestells (3) zu bringen ist, wobei in der Eingriffposition die Verriegelungsvorrichtung so beschaffen ist, dass sie dann, wenn sie in einer Verriegelungsposition ist, verhindert, dass der Eingriffabschnitt (78) von dem Kopplungselement (74) getrennt wird.

13. Kopplungsvorrichtung nach Anspruch 12, **dadurch gekennzeichnet, dass** sie als eine zusätzliche Einheit für die Anbringung an Eingriff- und Hubvorrichtungen vorhandener Schleppfahrzeuge entworfen ist.

14. Kopplungsvorrichtung nach Anspruch 12 oder 13, **dadurch gekennzeichnet, dass** der Eingriffabschnitt (78) an dem Befestigungsabschnitt (77) um eine horizontale Lagerwelle (82) drehbar gelagert ist.

15. Kopplungsvorrichtung nach einem der Ansprüche 12-14, **dadurch gekennzeichnet, dass** der Eingriffabschnitt (78) in der Verriegelungsposition der Verriegelungsvorrichtung in einem drehbaren Eingriff mit dem Kopplungselement (74) ist.

16. Kopplungsvorrichtung nach Anspruch 14, **dadurch gekennzeichnet, dass** der Eingriffabschnitt (78) an der Lagerwelle (82) elastisch festgeklemmt ist, um entgegen der Wirkung der Federkraft eine seitliche Bewegung relativ zu dem Kopplungselement auszuführen.

17. Kopplungsvorrichtung nach einem der Ansprüche 14-16, **dadurch gekennzeichnet, dass** sie einen Kraftstellkolben (97) umfasst, der so angeordnet ist, dass er den Eingriffabschnitt (78) zwischen einer oberen Aufnahmeposition und einer unteren Eingriffposition relativ zu dem Kopplungselement (74) dreht.

18. Kopplungsvorrichtung nach Anspruch 17, **dadurch gekennzeichnet, dass** sie einen Sensor (106) enthält, um die Aufnahmeposition und die Eingriffposition anzugeben.

19. Kopplungsvorrichtung nach einem der Ansprüche 12-18, **dadurch gekennzeichnet, dass** der Eingriffabschnitt (78) zwei vertikale Seitenplatten (85, 86) besitzt, die in einem Abstand voneinander angeordnet und miteinander starr verbunden sind und vordere Endabschnitte (93) besitzen, wovon jeder mit einer nach unten weisenden Kerbe (94) versehen ist, um das Kopplungselement (74) aufzunehmen, wobei jede Seitenplatte (85, 86) eine vordere Unterstützungskante (96) besitzt, die so angeordnet ist, dass sie eine Unterstützungsfläche für das Kopplungselement bildet, wobei der Unterstützungsbereich kontinuierlich in die Kerbe (94) übergeht.

20. Kopplungsvorrichtung nach Anspruch 19, **dadurch gekennzeichnet, dass** die Verriegelungsvorrichtung zwei Verriegelungsstifte (98) und ein Stellglied (99) für die synchrone Bewegung der Verriegelungsstifte (98) zwischen einer zurückgezogenen Startposition und einer vorstehenden Verriegelungsposition, um die Kerben (94) freizugeben bzw. um das Kopplungselement (74) in den Kerben (94) zu halten, umfasst.

## Revendications

1. Dispositif d'accrochage et de remorquage pour un véhicule tracteur (2) pour le mouvement au sol d'un avion (1), qui possède au moins une roue de train d'atterrissage avant (4), le véhicule tracteur (2) ayant un châssis monté sur roues (7), ledit dispositif d'accrochage et de remorquage étant conçu pour être mis en prise et pour lever la roue de train d'atterrissage avant (4) par rapport au châssis (7) et comprenant
un socle (17) qui est sensiblement en forme de U avec son ouverture tournée vers l'avion (1),
des éléments d'essieu (15) qui relient de manière flexible le socle (17) au châssis (7),
des actionneurs (13), agencés entre le socle (17) et le châssis (7) pour élever et abaisser le dispositif d'accrochage et de remorquage (12) par rapport au châssis (7) et
un support de roue de train d'atterrissage avant (18) comprenant une partie intérieure centrale (32) et ayant
un espace intérieur (35), qui peut être ouvert dans la direction de la roue de train d'atterrissage avant (4) pour recevoir la roue de train d'atterrissage avant (4),
des éléments de support (43, 48) pour supporter la roue de train d'atterrissage avant (4) dans le ledit espace (35) et
des supports de roue avant et arrière (44, 49) pour maintenir la roue de train d'atterrissage avant (4) dans la direction longitudinale du véhicule tracteur le support de roue de train d'atterrissage avant (18) étant sensiblement en forme de U avec son ouverture faisant face à l'avion (1) vu dans une position de départ où le support de roue de train d'atterrissage avant (18) est aligné pour se déplacer dans la position pour recevoir la roue de train d'atterrissage avant (4),
ledit support de roue de train d'atterrissage avant (18) et le socle (17) étant conçus en tant que deux unités séparées et comprennent des éléments d'essieu interagissant (70, 71), agencés selon un arc, qui définissent un axe de rotation vertical pour lesdites unités (17, 18),
ledit avion ayant un socle de roue de train d'atterrissage avant (3) qui comprend un arbre de direction (5) pour supporter la roue de train d'atterrissage avant (4), ledit socle de roue de train d'atterrissage avant (3) étant d'un premier type, dans lequel le dispositif d'accrochage et de remorquage est amené en prise avec la roue de train d'atterrissage avant (4) uniquement avec lesdits supports de roue avant et arrière (44, 49),
**caractérisé en ce que** - afin de faciliter l'utilisation du dispositif d'accrochage et de remorquage également pour un avion ayant un socle de roue de train d'atterrissage avant (3) d'un deuxième type, dans lequel la roue de train d'atterrissage avant (4) est montée sur le socle de roue de train d'atterrissage avant (3) par une liaison (72) et un mécanisme à ressort, où le socle de roue de train d'atterrissage avant (3) possède un élément de support orienté vers l'avant (73) qui à son extrémité libre supporte l'extrémité de ladite liaison (72) et un élément de couplage (74) - le dispositif d'accrochage et de remorquage (12) est muni d'un dispositif de couplage (75) destiné à être couplé audit élément de couplage (74) du socle de roue de train d'atterrissage avant (3) dudit deuxième type, ledit dispositif de couplage (75) comprenant une partie de fixation (77) qui est montée sur ladite partie intérieure centrale (32) du support de roue de train d'atterrissage avant (18), et une partie d'accrochage (78), qui est reliée à la partie de fixation (77) et comprend un dispositif de verrouillage, ladite partie d'accrochage (78) étant agencée pour s'étendre dans la direction vers la roue de train d'atterrissage avant (4) et pour être amenée en position d'accrochage avec ledit élément de couplage opposé (74) du socle de roue de train d'atterrissage avant (3), dans laquelle position d'accrochage ledit dispositif de verrouillage est agencé pour empêcher, quand il est dans une position de verrouillage, ladite partie d'accrochage (78) d'être séparée dudit élément de couplage (74).

2. Dispositif selon la revendication 1, **caractérisé en ce que** la partie d'accrochage (78) est tourillonnée à rotation dans la partie de fixation (77) autour d'un arbre de support horizontal (82).

3. Dispositif selon la revendication 1 ou 2, **caractérisé en ce que** la partie d'accrochage (78) est mise en prise rotative avec l'élément de couplage (74) dans la position de verrouillage du dispositif de verrouillage.

4. Dispositif selon la revendication 2, **caractérisé en ce que** la partie d'accrochage (78) est serrée de manière élastique sur l'arbre de support (82) pour un mouvement latéral par rapport à l'élément de couplage contre l'effet de force de rappel.

5. Dispositif selon l'une quelconque des revendications 2 à 4, **caractérisé en ce que** le dispositif de couplage comprend un cylindre de commande (97) qui est agencé pour faire tourner la partie d'accrochage (78) entre une position de réception supérieure et une position d'accrochage inférieure par rapport à l'élément de couplage (74).

6. Dispositif selon la revendication 5, **caractérisé en ce que** le dispositif de couplage contient un capteur (106) pour l'indication de ladite position de réception et ladite position d'accrochage.

7. Dispositif selon l'une quelconque des revendications 1 à 6, **caractérisé en ce que** la partie d'accrochage (78) possède deux plaques latérales verticales (85, 86), qui sont agencées à une distance l'une de l'autre et reliées solidement l'une à l'autre, et qui possèdent des parties d'extrémité avant (93) chacune avec une encoche orientée vers le bas (94) pour la réception dudit élément de couplage (74), chaque plaque latérale (85, 86) ayant un bord de support avant (96) agencé pour former une surface de support pour ledit élément de couplage, ladite surface de support étant continue dans ladite encoche (94).

8. Dispositif selon la revendication 7, **caractérisé en ce que** le dispositif de verrouillage comprend deux broches de verrouillage (98) et un actionneur (99) pour un mouvement synchrone des broches de verrouillage (98) entre une position de départ rétractée et une position de verrouillage en saillie pour exposer les encoches (94) et maintenir l'élément de couplage (74) dans les encoches (94), respectivement.

9. Dispositif selon l'une quelconque des revendications 1 à 8, **caractérisé en ce que** le socle (17) et le support de roue de train d'atterrissage avant (18) sont munis de butées d'interaction (55, 56, 57), qui sont agencées pour limiter la rotation du support de roue de train avant (18) dans les deux directions à partir d'une position de départ centrale, et **en ce que** le socle (17) est muni de deux transducteurs de position d'extrémité (58, 59) agencés à l'avant des deux butées (55, 56) sur le socle (17) afin de détecter la butée (57) du support de roue de train d'atterrissage avant (18) afin d'indiquer l'angle de rotation du support de roue de train d'atterrissage avant (18) par rapport au socle (17) et au véhicule tracteur (2).

10. Dispositif selon la revendication 9, **caractérisé en ce que** le support de roue de train d'atterrissage avant (18) est agencé pour tourner librement quand la course du véhicule tracteur (2) change par rapport à l'avion (1).

11. Dispositif selon l'une quelconque des revendications 9 et 10, **caractérisé en ce que** le dispositif d'accrochage et de remorquage (12) comprend un dispositif empêchant la rotation qui agit entre le socle (17) et le support de roue de train d'atterrissage avant (18) pour former un couple entre le socle (17) et le support de roue de train d'atterrissage avant (18) quand il y a un changement de la course du véhicule tracteur (2) par rapport à l'avion (1).

12. Dispositif de couplage adapté pour être monté sur un dispositif d'accrochage et de remorquage pour un véhicule tracteur (2) pour le mouvement au sol d'avion qui possède au moins une roue de train d'atterrissage avant, ledit dispositif d'accrochage et de remorquage étant conçu tel que défini dans la revendication 1, **caractérisé en ce que** - afin de faciliter l'utilisation dudit dispositif d'accrochage et de remorquage (12) également pour un avion ayant un socle de roue de train d'atterrissage avant (3) d'un deuxième type, dans lequel la roue de train d'atterrissage avant (4) est montée sur le socle de roue de train d'atterrissage avant (3) par une liaison (72) et un mécanisme à ressort, où le socle de roue de train d'atterrissage avant (3) possède un élément de support orienté vers l'avant (73) qui à son extrémité libre supporte l'extrémité de ladite liaison (72) et un élément de couplage (74) - le dispositif de couplage (75) comprend une partie de fixation (77) pour le montage de ladite partie intérieure centrale (32) du support à roue de train d'atterrissage avant (18) et une partie d'accrochage (78) qui est reliée à la partie de fixation (77) et comprend un dispositif de verrouillage, ladite partie d'accrochage (78) étant agencée pour s'étendre dans la direction vers la roue de train d'atterrissage avant (4) et pour être amenée dans la position d'accrochage avec ledit élément de couplage opposé (74) du socle de roue de train d'atterrissage avant (3), dans laquelle position d'accrochage le dispositif de verrouillage est agencé pour empêcher, quand il est dans une position de verrouillage, la partie d'accrochage (78) d'être séparée de l'élément de couplage (74).

13. Dispositif de couplage selon la revendication 12, **caractérisé en ce qu'**il est conçu en tant qu'unité supplémentaire pour le montage sur des dispositifs d'accrochage et de remorquage de véhicules tracteurs existants.

14. Dispositif de couplage selon la revendication 12 ou 13, **caractérisé en ce que** la partie d'accrochage (78) est tourillonnée à rotation à la partie de fixation (77) autour d'un arbre de support horizontal (82).

15. Dispositif de couplage selon l'une quelconque des revendications 12 à 14, **caractérisé en ce que** la partie d'accrochage (78) est mise en prise à rotation avec l'élément de couplage (74) dans la position de verrouillage du dispositif de verrouillage.

16. Dispositif de couplage selon la revendication 14, **caractérisé en ce que** la partie d'accrochage (78) est serrée de manière élastique sur l'arbre de support (82) pour un mouvement latéral par rapport à l'élément de couplage contre l'effet d'une force de rappel.

17. Dispositif de couplage selon l'une quelconque des revendications 14 à 16, **caractérisé en ce qu'**il comprend un cylindre de commande (97), qui est agencé pour faire tourner la partie d'accrochage (78) entre une position de réception supérieure et une position d'accrochage inférieure par rapport à l'élément de couplage (74).

18. Dispositif de couplage selon la revendication 17, **caractérisé en ce qu'**il comprend un capteur (106) pour l'indication de ladite position de réception et de ladite position d'accrochage.

19. Dispositif de couplage selon l'une quelconque des revendications 12 à 18, **caractérisé en ce que** la partie d'accrochage (78) possède deux plaques latérales verticales (85, 86) qui sont agencées à une distance l'une de l'autre et reliées solidement l'une à l'autre, et qui possèdent des parties d'extrémité avant (93) chacune avec une encoche orientée vers le bas (94) pour la réception dudit élément de couplage (74), chaque plaque latérale (85, 86) ayant un bord de support avant (96) agencé pour former une surface de support pour ledit élément de couplage, ladite région de support continuant dans ladite encoche (94).

20. Dispositif de couplage selon la revendication 19, **caractérisé en ce que** le dispositif de verrouillage comprend deux broches de verrouillage (98) et un actionneur (99) pour un mouvement synchrone des broches de verrouillage (98) entre une position de départ rétractée et une position de verrouillage en saillie pour exposer les encoches (94) et maintenir l'élément de couplage (74) dans les encoches (94), respectivement.
